(19) Europäisches Patentamt
European Patent Office
Office européen des brevets

(11) EP 4 749 485 A1

(12) **EUROPEAN PATENT APPLICATION**
published in accordance with Art. 153(4) EPC

(43) Date of publication:
**27.05.2026 Bulletin 2026/22**

(21) Application number: **24845090.0**

(22) Date of filing: **08.03.2024**

(51) International Patent Classification (IPC):
**G06F 18/213** (2023.01)  **G06N 3/082** (2023.01)

(52) Cooperative Patent Classification (CPC):
**G06F 18/213; G06N 3/082**

(86) International application number:
**PCT/JP2024/009074**

(87) International publication number:
**WO 2025/022705 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.07.2023 JP 2023119202**

(71) Applicant: **INSTITUTE OF SCIENCE TOKYO
Tokyo 152-8550 (JP)**

(72) Inventor: **SUZUKI Kenji
Tokyo 152-8550 (JP)**

(74) Representative: **Potter Clarkson
Chapel Quarter
Mount Street
Nottingham NG1 6HQ (GB)**

(54) **NETWORK ANALYSIS SYSTEM, NETWORK ANALYSIS METHOD, AND PROGRAM**

(57)     A condensing processing apparatus (1) condenses a neural network by excluding one or more units from a plurality of units included in the neural network in a range in which the output of the neural network is smaller than a predetermined error. A function map generating apparatus (2) generates, in a state where a value is output from only one unit to be analyzed among a plurality of units included in a layer to be analyzed, a function map reflecting processing of the unit to be analyzed by inputting an input image to the condensed neural network, the layer to be analyzed being one of one or more intermediate layers of the condensed neural network. A clustering apparatus (3) performs hierarchical clustering for a plurality of function maps generated for a plurality of input images, and thereby groups units corresponding to the plurality of function maps.

Fig. 3

**Description**

**Technical Field**

The present disclosure relates to a network analyzing system, a network analyzing method, and a program.

**Background Art**

Artificial intelligence (AI) based on machine learning is widely applied in various fields. Machine learning models acquire functions by learning data, and they tend to be "black boxes" in which it is difficult to interpret the relationship between an object and a result. In particular, deep learning is an end-to-end machine learning paradigm in which one model "learns all in one stroke" from input data to a final result, so everything is a black box.

In recent years, the scales of deep learning models have become larger and their structures become more complex, so that it is extremely difficult to understand their contents. Therefore, studies on "explainable AI", i.e., methods for explaining such complex and large-scale deep learning models with good foresight, have not progressed much.

In the field of deep learning, methodologies in which they try to solve everything with one deep learning model are overwhelmingly mainstream. However, the scales of such "learn all in one stroke and solve all in one stroke" models become large and their structures become complex, thus significantly hindering researchers or the like from understanding their contents. Therefore, studies on methodologies for analyzing or explaining such complex and large-scale deep learning models with good foresight have not progressed much.

As a study for attempting to explain the contents of a deep learning model, (1) a method for visualizing which part of an input image the model has focused on to make a decision is known. As such a method, for example, GradCAM has been proposed (Non-patent Literature 1). In GradCAM, which part of an input image has affected the determination made by the model is calculated from a feature value map by using the fact that a convolutional neural network (CNN) extracts feature values while keeping positional information.

Further, a method for visualizing features acquired in a layer of the model as a map is also known. As such a method, for example, a method using a reverse convolutional neural network has been proposed, although its application is limited to CNN models (Non-patent Literature 2). In the method using a reverse convolutional neural network, it is visualized which features in an input image the neurons in layers pay attention to by reverse calculation (reverse convolution) in which calculation is performed from the output to the input, which is the reverse of forward calculation (convolution) in which calculation is performed from the input to the output.

**Citation List**

**Patent Literature**

    Patent Literature 1: United States Patent No. 7,545,965
    Patent Literature 2: United States Patent No. 6,819,790

**Non Patent Literature**

    Non-patent Literature 1: R. R. Selvaraju, M. Cogswell, A. Das, R. Vedantam, D. Parikh and D. Batra", Grad-CAM: Visual Explanations from Deep Networks via Gradient-Based Localization", 2017 IEEE International Conference on Computer Vision (ICCV), Venice, Italy, 2017, pp. 618-626, doi: 10.1109/ICCV.2017.74.
    Non-patent Literature 2: Matthew D. Zeiler, et al.", Visualizing and Understanding Convolutional Networks", ECCV 2014, Part I, LNCS 8689, pp. 818-833.
    Non-patent Literature 3: Suzuki K, et al. "A Simple Neural Network Pruning Algorithm with Application to Filter Synthesis", Neural Proc Lett 2001.
    Non-patent Literature 4: Ziv Joseph, et al. "Fast optimal leaf ordering for hierarchical clustering", Bioinformatics, 2001, vol. 17, Suppl.1, pp. S22-S29.

**Summary of Invention**

## Technical Problem

However, in the above-described method, although the area of interest in the input image is visualized, and which features in the input image are paid attention to is visualized, neither the behavior of the neural network nor the function of neurons in the neural network is clarified.

To begin with, even if a huge number of neurons of the neural network can be visualized, it is difficult to interpret what they mean. Further, finding interpretable neurons not only requires manual labor but also is considered to be merely accidental. Further, it is difficult to interpret neural networks or neurons in a unified standard, and far-fetched interpretations are often made. As described above, there are significant drawbacks in the validity and the stability of interpretations in the above-described method.

The present disclosure has been made in view of the above-described circumstances, and an object thereof is to analyze functions of a neural network efficiently, stably, and clearly.

## Solution to Problem

A network analyzing system according to an aspect of the present disclosure includes: a condensing processing apparatus configured to condense a neural network by excluding one or more units from a plurality of units included in the neural network so that an error of an output of the neural network falls within a predetermined range; and a function map generating apparatus configured to generate, in a state where a value is output from only one unit to be analyzed among a plurality of units included in a layer to be analyzed, a function map reflecting processing of the unit to be analyzed by inputting an input image to the condensed neural network, the layer to be analyzed being one of one or more intermediate layers of the condensed neural network.

A network analyzing system according to an aspect of the present disclosure is the above-described network analyzing system preferably further including a clustering apparatus configured to perform clustering for the plurality of function maps generated for the plurality of input images, and thereby grouping units corresponding to the plurality of function maps.

A network analyzing system according to an aspect of the present disclosure is the above-described network analyzing system, in which in the function map, degrees of enhancement processing or suppression processing performed for pixels or patterns of the input image are preferably displayed in gradation.

A network analyzing system according to an aspect of the present disclosure is the above-described network analyzing system, in which in the function map, pixels or patterns for which neither the enhancement processing nor the suppression processing is performed are preferably displayed at an intermediate gradation level, pixels or patterns for which the enhancement processing is performed are preferably displayed at one of gradation levels of two areas located on both sides of the intermediate gradation level in a range of gradation display, and pixels or patterns for which the suppression processing is performed are preferably displayed at the other gradation level of the two areas located on both sides of the intermediate gradation level.

A network analyzing system according to an aspect of the present disclosure is the above-described network analyzing system, in which the function map generating apparatus preferably includes: a gate operation unit configured to operate the neural network so that a value is output from only the unit to be analyzed of the layer to be analyzed in the neural network; and a map generating unit configured to generate a function map reflecting processing of the unit to be analyzed by inputting the input image to the neural network.

A network analyzing method according to an aspect of the present disclosure includes: condensing a neural network by excluding one or more units from a plurality of units included in the neural network so that an error of an output of the neural network falls within a predetermined range; and generating, in a state where a value is output from only one unit to be analyzed among a plurality of units included in a layer to be analyzed, a function map reflecting processing of the unit to be analyzed by inputting an input image to the condensed neural network, the layer to be analyzed being one of one or more intermediate layers of the condensed neural network.

A program according to an aspect of the present disclosure causes a computer to execute: processing for condensing a neural network by excluding one or more units from a plurality of units included in the neural network so that an error of an output of the neural network falls within a predetermined range; and processing for generating, in a state where a value is output from only one unit to be analyzed among a plurality of units included in a layer to be analyzed, a function map reflecting processing of the unit to be analyzed by inputting an input image to the condensed neural network, the layer to be analyzed being one of one or more intermediate layers of the condensed neural network.

## Advantageous Effects of Invention

According to the present disclosure, it is possible to analyze functions of a neural network efficiently, stably, and clearly.

**Brief Description of Drawings**

Fig. 1 shows an example of a hardware configuration for implementing a network analyzing system;
Fig. 2 shows an overview of a structure of an MTANN and data input to the MTANN;
Fig. 3 schematically shows a configuration of a network analyzing system;
Fig. 4 shows a modified example of a network analyzing system;
Fig. 5 schematically shows a configuration of a condensing processing apparatus;
Fig. 6 schematically shows a configuration of a neural network to be processed;
Fig. 7 shows a flowchart of a neural network condensing process;
Fig. 8 shows a BCE loss function that changes by exclusion of units;
Fig. 9 shows an example of an output image when an input image to be analyzed is input to a trained neural network after condensing process;
Fig. 10 schematically shows a configuration of a function map generating apparatus;
Fig. 11 is a flowchart of a map generating process;
Fig. 12 schematically shows a neural network after gate setting;
Fig. 13 shows an example of a choice of a unit to be analyzed;
Fig. 14 is a flowchart of normalizing process;
Fig. 15 shows an example of a function map;
Fig. 16 schematically shows a configuration of a clustering apparatus;
Fig. 17 is a flowchart of a clustering process;
Fig. 18 shows an example of grouping of units; and
Fig. 19 shows a relationship between a function map and groups.

**Description of Embodiments**

The specific embodiments will be described with reference to the drawings. However, the present invention is not limited to the following embodiments. In order to clarify the description, the following descriptions and drawings will be simplified as appropriate. The same elements are denoted by the same reference signs, and duplicate descriptions will be omitted.

First Embodiment

In this embodiment, a configuration and a method that can explain the function and the behavior of a machine learning model such as a deep learning model will be described. According to the configuration and the method of the present embodiment, it is possible to clarify the functions of each neuron or groups of neurons in a trained deep learning model, and to explain the overall behavior of the model that results from a combination thereof.

The configuration and the method described hereinafter are a technology having large ripple effects that contribute to the development, the use, and the implementation of various types of AI, and can be widely applied to various fields to which AI is applied, such as medical cares, health, autonomous driving, communication, robots, space, e-commerce, online sales, social networks, securities, financial insurances, and environments.

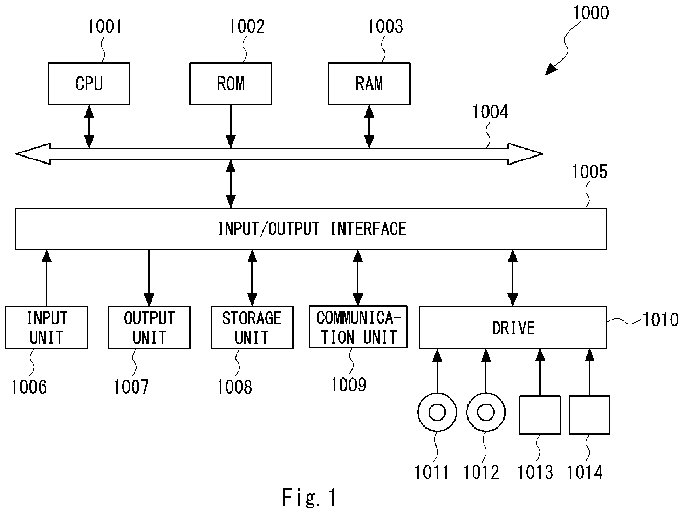

First, as a premise for understanding a network analyzing system according to a first embodiment, an example of a hardware configuration for implementing a network analyzing system will be described. Fig. 1 shows an example of a hardware configuration for implementing a network analyzing system. A network analyzing system can be implemented by a computer 1000 such as a dedicated computer or a personal computer (PC). However, the computer need not be physically single, and may be multiple when performing distributed processing. As shown in Fig. 1, the computer 1000 includes a central processing unit (CPU) 1001, a read only memory (ROM) 1002 and a random-access memory (RAM) 1003, which are connected to each other via a bus 1004. Although the description of the OS software for operating the computer or the like will be omitted, it is assumed that the computer for constructing the network analyzing system also naturally has one.

An input/output interface 1005 is also connected to the bus 1004. For example, an input unit 1006 configured of a keyboard, mouse, sensor, or the like, an output unit 1007 configured of a display configured of a CRT, LCD, or the like, and a headphone, speaker, or the like, a memory unit 1008 configured of a hard disk, or the like, and a communication unit 1009 configured of a modem, terminal adapter, or the like, are connected to the input/output interface 1005.

The CPU 1001 performs various types of processing according to various programs stored in the ROM 1002 or loaded into the RAM 1003 from the memory unit 1008, and in the present embodiment, for example, processing of various units of the network analyzing system described later. Note that, a GPU (Graphics Processing Unit) may be provided to perform various types of processing according to various programs stored in the ROM 1002 or loaded into the RAM 1003 from the memory unit 1008, as the CPU 1001, and in the present embodiment, for example, processing of various units of the network analyzing system described later. Note that, the GPU is suitable for applications in which routine processing is performed in parallel, and by applying it to processing in neural networks, which will be described later, it is possible to improve the processing speed compared to the CPU 1001. Data necessary for the CPU 1001 and the GPU to perform various types of processing are also stored in the RAM 1003 as appropriate.

For example, the communication unit 1009 performs communication processing via the Internet (not shown), transmits data provided by the CPU 1001, and outputs data received from the communication partner to the CPU 1001, the RAM 1003, and the memory unit 1008. The memory unit 1008 communicates with the CPU 1001 to store and erase information. The communication unit 1009 also performs communication processing of analog or digital signals with other apparatuses.

Further, a drive 1010 is connected to the input/output interface 1005 as needed. For example, a magnetic disk 1011, an optical disk 1012, a flexible disk 1013, or a semiconductor memory 1014 is provided in the input/output interface 1005 as appropriate. Further, a computer program read from them is installed in the memory unit 1008 as needed.

Next, a training method using a neural network image according to this embodiment will be described. In this embodiment, it is desirable to use, for example, a method for directly learning an image, such as image output-type deep learning, as a method for machine-learning raw image data. An example of image output-type deep learning is an MTANN (Massive-Training Artificial Neural Network). The MTANN is a nonlinear deep learning model capable of outputting an image. In this embodiment, the calculating means of the network analyzing system learns a trained model (estimator) acquired by the MTANN.

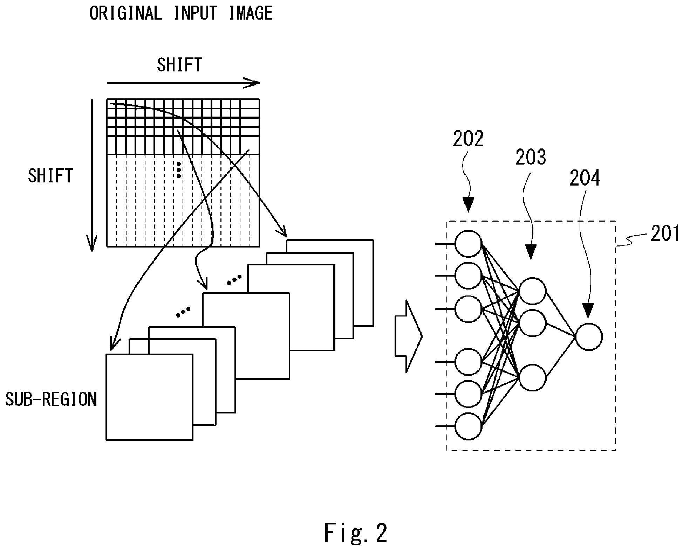

The MTANN is described in Patent Literatures 1 and 2, and will be briefly described hereinafter. The MTANN is a neural network applicable to various types of image processing and pattern recognition processing. Fig. 2 shows an overview of the structure of the MTANN and data input to the MTANN.

The MTANN 201 is composed of a multilayer neural network (ANN: Artificial Neural Network) in which levels of input pixels and those of output pixels can be directly operated. The multilayer ANN of the MTANN 201 is composed of an input layer 202, a hidden layer 203, and an output layer 204. Each of the input layer 202 and the hidden layer 203 has a plurality of units (neurons), while the output layer 204 has only one unit (neuron).

Each of the input layer 202, the hidden layer 203, and the output layer 204 has a linear function as activation function, and has a sigmoid function and a linear function. The characteristics of the ANN in image processing are significantly improved by using a linear function as the activation function in the output layer. Therefore, a linear function, instead of the sigmoid function, is applied as the activation function of the unit in the output layer in the MTANN.

The MTANN 201 acquires various filtering functions such as a high-pass filtering process, a low-pass filtering, a band-pass filtering process, noise reduction, edge enhancement, edge detection, interpolation, pattern matching, object enhancement, object recognition, a wavelet transform, a texture analysis by a Fourier transform, and segmentation, and thereby can perform image processing and pattern recognition. In this way, the MTANN 201 can approximately carry out all sorts of mapping processes.

When an image is input to the MTANN in the training phase or the execution phase, the pixel values of the input image are normalized. For example, in the case where the quantization level levels of pixel values of an input image is 10 bits (1,024 gradation levels), the quantized pixel value 0 is normalized to 0 (lower limit value of dynamic range), and the quantized a pixel value 1,023 is normalized to 1 (upper limit value of dynamic range). This normalization is merely an example, and other normalizing methods may be used.

An image is input to the MTANN 201 by successively inputting sub-regions acquired by scanning the original input image in a local window Rs having a predetermined size. In this process, for example, the input image is scanned by repeating processing of shifting the local window Rs from one end of a row of pixels by a predetermined number of pixels at a time, and shifting it to the next row when it reaches the other end. That is, the local window is shifted by a predetermined number of pixels at a time while keeping some overlap. The predetermined number may be one pixel. In this way, it is possible to cut out sub-regions from one sheet of input data, normalize pixel values included in the sub-regions, and then input them to the MTANN 201.

The pixel values f(x, y) output from the MTANN 201 are continuous values corresponding to the pixel values at the centers of the local windows Rs, and are expressed by the below-shown expression.

[Expression 1]

$$f(x,y)=NN\{I(x,y)\}=NN\{g(x\text{-}i,y\text{-}j)\mid i,j\in R_S\} \qquad [1]$$

In Expression [1], x and y are coordinate values of the image; NN {*} is an output of the modified ANN; I(x, y) is an input vector to the modified ANN; and g(x, y) is a normalized pixel value in the local window Rs.

The pixel value f(x, y) of the output image, i.e., the output value of the MTANN, is output as an estimated value of a desired value that is determined according to the field to which the technology is applied. In the case where a low-quality image is converted into a high-quality image as in this embodiment, the estimated value of the pixel value of the high-quality image is output as the pixel value f(x, y).

In the case where it is determined whether a lesion is included in the image, the "likelihood indicating the possibility of the lesion" is output as the pixel value f(x, y).

As disclosed in Patent Literatures 1 and 2, the MTANN is trained by performing supervised learning using teacher data. Note that at the time of training, there is no need to scan the whole input image. That is, it is possible to significantly reduce the calculation amount for the training by sampling only necessary parts and extracting sub-regions. Such sampling can be randomly performed, or an important area such as a lesion can be intensively sampled. Then, by inputting an input image to be diagnosed into the trained MTANN, the estimated pixel value described above is obtained for each local window Rs. Then, a desired output image can be obtained based on information about the local window obtained from the input image.

In the case where it is determined whether a lesion is included in the image, it is possible to determine whether a lesion is included in the input image to be diagnosed based on the pixel values obtained from one input image to be diagnosed.

Operations in the training phase (i.e., the training method) and the execution phase in ordinary machine learning methods can be applied to those in the training phase and the execution phase using the MTANN. For example, the methods disclosed in Patent Literatures 4 and 5 can be used. That is, by inputting input data and teacher data for larging into a network composed of the MTANN and thereby performing supervised machine learning, a trained model can be constructed.

Note that the deep learning methods that can be applied are not limited to the MTANN. That is, various deep learning methods such as convolutional neural networks (CNN), shift-invariant neural networks, deep belief networks (DBN), deep neural networks (DNN), fully convolutional neural networks (FCN), U-Net, V-Net, multi-resolution massive-training artificial neural networks, multiple expert massive-training artificial neural networks, SegNet, VGG-16, LeNet, AlexNet, Residual network (ResNet), Auto encoders and decoders, Generative adversarial networks (GAN), Recurrent Neural Networks (RNN), Recursive Neural Networks, Long Short-Term Memory (LSTM), Transformer, and Vision Transformer can also be used.

A network analyzing system 100 according to this embodiment will be described. The network analyzing system 100 is configured as one for implementing an explainable AI by performing processing that makes it possible to explain the functions of the neural network and neurons. Hereinafter, a neuron is referred to as a unit in this embodiment.

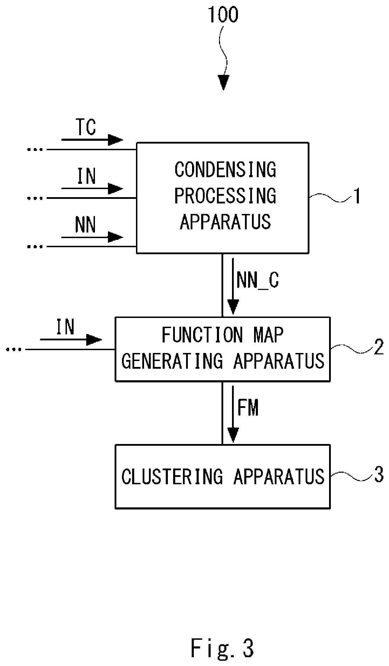

Fig. 3 schematically shows the configuration of the network analyzing system 100. The network analyzing system 100 includes a condensing processing apparatus 1, a function map generating apparatus 2, and a clustering apparatus 3. The condensing processing apparatus 1, the function map generating apparatus 2, and the clustering apparatus 3 may be implemented, for example, by having a CPU 1001 of a computer 1000 shown in Fig. 1 and other parts such as a storage unit 1008 corporate with each other.

The condensing processing apparatus 1 will be described. The scale of a neural network for deep learning is large, and there are many redundant units and units that do not function, so that the functions are dispersed among a large number of neurons and are thereby diluted. Such a nature of the neural network hinders researchers or the like from understanding the inside of the neural network. Therefore, the condensing processing apparatus 1 performs processing for condensing the structure of the neural network by removing redundant units and units that do not function so that it has the minimum network structure necessary to implement a desired function. In this way, functions dispersed among a large number of units and thereby diluted are condensed into a smaller number of units.

As shown in Fig. 3, the condensing processing apparatus 1 performs a condensing process for the already-constructed neural network NN. In this way, the number of units of which the functions are to be analyzed is reduced and the functions are put together in a smaller number of neurons, thus enabling the neural network to be analyzed easily. The neural network NN to be processed, an input image IN, and a teacher image TC which is a desired output image for the input image are provided to the condensing processing apparatus 1 as appropriate. The condensing processing apparatus 1 passes the condensed neural network NN_C to the function map generating apparatus 2.

Note that a method for optimizing the structure of a neural network is also proposed, for example, in Non-patent Literature 3 although it is different from the condensing process for the neural network described here.

An input image IN for which a function map is to be generated is provided to the function map generating apparatus 2 as appropriate. The function map generating apparatus 2 generates a function map in which the functions of units to be analyzed included in the condensed neural network NN_C are shown. In this way, the functions of the units to be analyzed can be visualized. The function map generating apparatus passes the generated function map FM to the clustering apparatus 3.

The input images IN provided to the condensing processing apparatus 1 and the function map generating apparatus 2 may be image data same as each other or different from each other as required.

The clustering apparatus 3 performs a hierarchical clustering process by using a plurality of function maps generated for a plurality of units as inputs, and thereby grouping units having similar functions. If necessary, it is also possible to visualize the closeness between groups.

The method for supplying the neural network NN and the input image IN to the network analyzing system 100 is not limited to any particular methods. For example, information necessary for configuring the neural network NN, such as weight parameters, may be selected as appropriate and supplied to the network analyzing system 100.

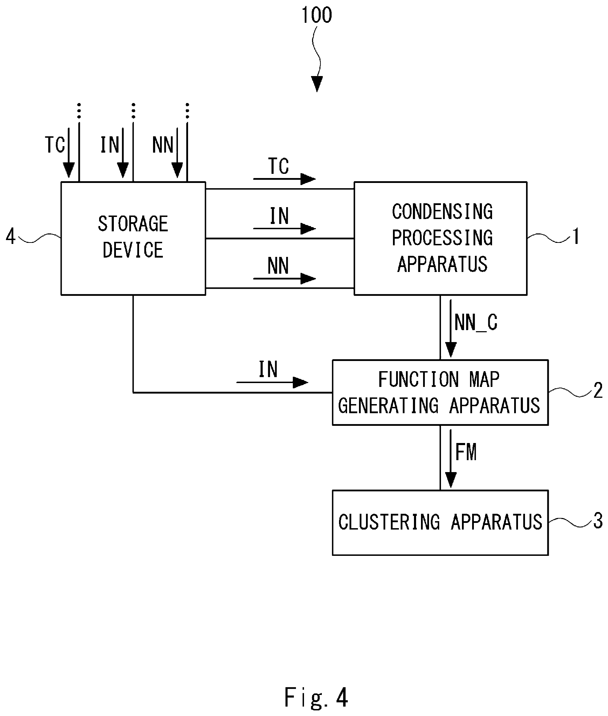

Fig. 4 shows a modified example of the network analyzing system 100. In Fig. 4, compared with Fig. 3, the network analyzing system 100 also includes a storage device 4. The neural network NN, the input image IN, and the teacher image TC are stored in advance in the storage device 4. The neural network NN, the input image IN, and the teacher image TC stored in the storage device 4 may be provided to the condensing processing apparatus 1 as required. The input image IN stored in the storage device 4 may be provided to the function map generating apparatus 2 as required. Further, information such as a neural network or parameters generated or updated during the processing performed in the network analyzing system 100 can be temporarily stored in the storage device 4. The storage device 4 may be implemented by any of various types of storage means such as the storage unit 1008 of the computer 1000 shown in Fig. 1.

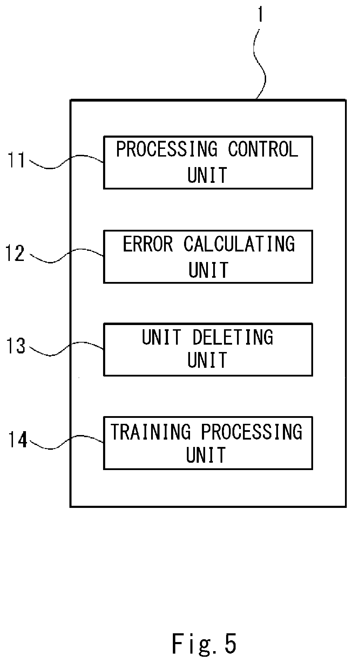

The network analyzing system 100 will be described hereinafter in a more detailed manner. Fig. 5 schematically shows the configuration of the condensing processing apparatus 1. The condensing processing apparatus 1 includes processing control unit 11, an error calculating unit 12, a unit deleting unit 13, and a training processing unit 14.

A trained neural network NN, a plurality of input images IN to be used in a neural network condensing process, and teacher images TC which are desired output images are provided to the condensing processing apparatus 1 as appropriate.

The process control unit 11 performs predetermined processes such as processing for operating and determining parameters used for processing for deleting a unit in the neural network NN. The error calculating unit 12 calculates an error of an output of the neural network NN. The error calculated here may be any of an error function, a cost function, a loss function, an approximation function, and a distance function defined by the input image IN and the teacher image TC. The unit deleting unit 13 performs processing for deleting a unit from the neural network NN based on the error calculated by the error calculating unit 12. The training processing unit 14 performs re-training of the neural network NN from which the unit deleting unit 13 has deleted the unit.

A neural network condensing process performed in the condensing processing apparatus 1 will be described. A neural network condensing process according to this embodiment is applied to a deep learning model that has been trained with a sufficient number of intermediate layer units, and makes it possible to acquire a neural network in which the number of units is reduced and with which it is possible to achieve a target error.

In this process, a unit that will have the smallest effect on the error when it is deleted is deleted, and then processing for re-training an error that is increased by the deletion of the unit is performed. These unit deleting process and the re-training process are alternately performed based on the same evaluation criterion. Therefore, redundant units are deleted and the functions of the deleted units are transferred to the remaining units, and by doing so, a compact neural network in which the functions are put together is acquired.

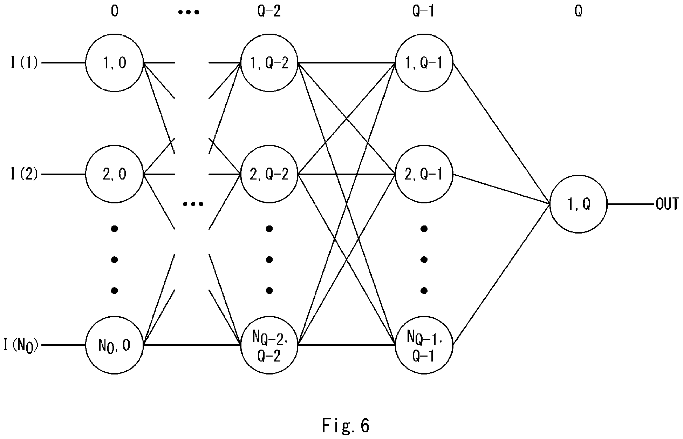

Fig. 6 schematically shows a configuration of a neural network NN to be processed. The neural network NN to be processed is composed of $Q+1$ layers consisting of the 0th layer to the Qth layer. Note that Q is an integer of 1 or greater. Note that q is an integer of 1 to $Q+1$; the number of units in a qth layer is represented by $N_q$; and an nth unit in the qth layer is represented by $U(n, q)$. n is an integer from 1 to $N_q$.

The 0th layer is an input layer; the 1st to (q-1)th layers are intermediate layers; and the Qth layer is an output layer. The number $N_Q$ of units in the Qth layer, which is the output layer, is an integer of 1 or greater. However, for the simplicity of explanation, Fig. 6 shows a case where the number of units in the output layer is one ($N_q=1$). Each of the numbers $N_0$ to $N_{Q-1}$ of units in the 0th to (q-1)th layers is an integer of 2 or greater. Input data $I(0)$ to $I(N_0)$ are input to the units $U(1, 0)$ to $U(N_0, 0)$, respectively, in the 0th layer, which is the input layer.

Among the 0th to (Q-1)th layers, a plurality of units in an immediately preceding layer and units in an immediately subsequent layer are connected in an all-inclusive manner so as to form a neural network. The outputs of the units $U(1, Q-1)$ to $U(N_{Q-1}, Q-1)$ in the (Q-1)th layer at the last stage are connected to the unit $U(1, Q)$ in the Qth layer, which is the output layer. Note that when the Qth layer, which is the output layer, includes a plurality of units, the outputs of the units $U(1, Q-1)$ to $U(N_{Q-1}, Q-1)$ in the (Q-1)th layer at the last-stage are connected to the units $U(1, Q)$ to $U(N_Q, Q)$ in the Qth layer, and a value is output from each of the units $U(1, Q)$ to $U(N_Q, Q)$.

Note that the number of units belonging to the same layer may change as the processing progresses and units are deleted one after another. Therefore, the number $N_q$ of units in the qth layer may change as the processing progresses.

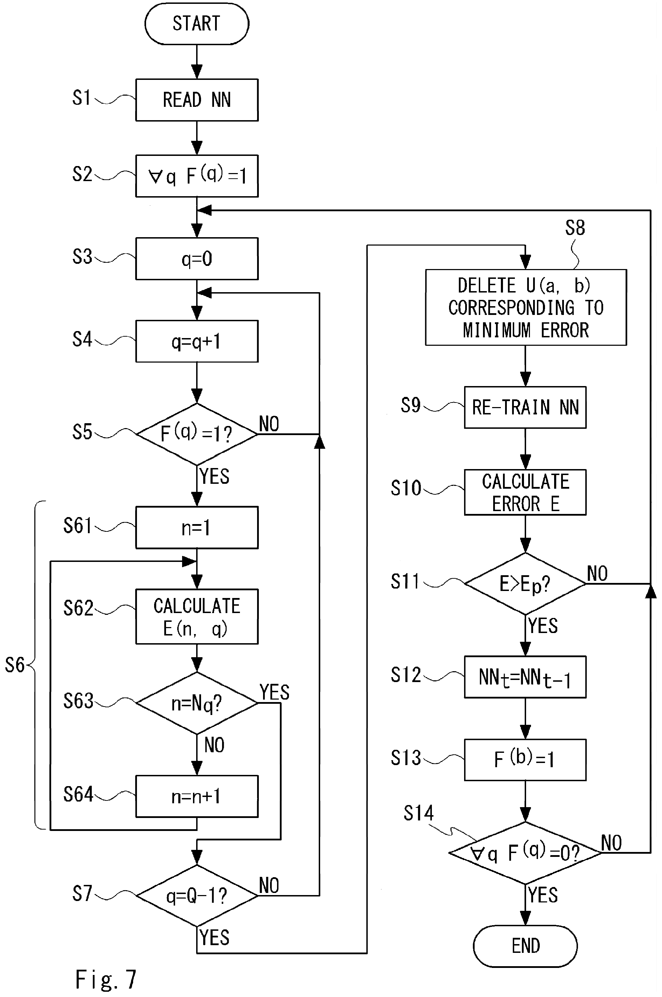

Fig. 7 shows a flowchart of a neural network condensing process. Note that $F^{(q)}$ in Fig. 7 is a flag indicating the layer in which units are to be deleted. Further, the error that occurs when the nth unit in the qth layer is deleted is represented by $E(n, q)$.

Step S1

The process control unit 11 reads a neural network NN in which units are to be deleted.

Step S2

The process control unit 11 sets a unit deleting target flag $F^{(q)}$ of each layer to 1. That is, 1 is set to each of $F^{(1)}$ to $F^{(Q)}$. When $F^{(q)} = 1$, it indicates that the qth layer is a layer in which units are to be deleted, and when $F^{(q)} = 0$, it indicates that the qth layer is excluded from the layers in which units are to be deleted.

Step S3

The process control unit 11 sets an initial value 0 to q (q=0).

Step S4

The process control unit 11 adds 1 to q (q=q+1).

Step S5

The process control unit 11 determines whether the unit deleting target flag $F^{(q)}$ of the qth layer is 1 ($F^{(q)}=1$). When the unit deleting target flag $F^{(q)}$ of the qth layer is not 1, i.e., is 0, (Step S5: No), it returns the process to the step S4.

Step S6

When the unit deleting target flag $F^{(q)}$ of the qth layer is 1 (Step S5: Yes), the error calculating unit 12 calculates, for each of the 1st to $N_q$th units, an error under the condition that one of the units belonging to the qth layer is virtually deleted. That is, in this process, errors $E(1, q)$ to $E(N_q, q)$ are calculated. Note that the virtual deletion of a unit can be implemented by, for example, setting the output of the unit to be deleted to zero.

An example of the step S6 will be described hereinafter. In the step S6, the below-shown steps S61 to S64 may be performed.

Step S61

An initial value of 1 is set to n (n=1).

Step S62

An error $E(n, q)$ that will occur when the nth unit $U(n, q)$ in the qth layer is virtually deleted is calculated.

Step S63

It is determined whether n is equal to $N_q$. When n is equal to $N_q$ (Step S63: Yes), the processing proceeds to the next step S7.

Step S64

When n is not equal to $N_q$ (Step S63: No), 1 is added to n (n=n+1), and the processing returns to the step S6.

Step S7

After the step S5, the process control unit 11 determines whether q is equal to Q-1 (q=Q-1). When q is not Q-1 (Step S7: No), the processing returns to the step S4.

Step S8

When q is equal to Q-1 (Step S7: Yes), i.e., when the calculation of errors is completed for all the units belonging to all the layers to be processed, the unit deleting unit 13 specifies an error having the minimum value among the calculated errors. Then, an ath unit U(a, b) in a bth layer corresponding to the specified error E(a, b) is deleted. Note that the neural network from which the ath unit U(a, b) in the bth layer has not been deleted yet is represented by $NN_{t-1}$, and the neural network from which the ath unit U(a, b) in the bth layer has already been deleted is represented by NNt.

Step S9

The training processing unit 14 performs re-training of the neural network $NN_t$ from which the ath unit U(a, b) in the bth layer has been deleted.

Step S10

The error calculating unit 12 calculates an error E of the retrained neural network NNt.

Step S11

The process control unit 11 determines whether the error E is larger than an error reference value $E_p$. When the error E is equal to or smaller than the error reference value $E_p$ (Step S11: No), the processing returns to the step S3.

Step S12

When the error E is larger than the error reference value $E_p$ (Step S11: Yes), the process control unit 11 replaces the neural network $NN_t$ with the neural network $NN_{t-1}$ from which the ath unit U(a, b) in the bth layer has not been deleted yet.

Step S13

The process control unit 11 sets the value of $F^{(b)}$ to 0 in order to exclude the bth layer from those for which the unit deleting process is to be performed.

Step S14

The process control unit 11 determines whether all the layers are excluded from the those for which the unit deleting process is to be performed. When there is a layer that has not been excluded from the those for which the unit deleting process is to be performed (Step S14: No), the processing returns to the step S3. When all the layers are excluded from the those for which the unit deleting process is to be performed (Step S14: Yes), it is considered that a condensed neural network NN_C capable of exhibiting a desired performance is generated, and hence the series of processes is finished.

Next, the effects of the neural network condensing process are verified. For the verification, the above-described neural network condensing process was applied to a neural network model that had learned a task of segmenting a liver tumor from a CT image of a human liver. As the neural network model, the aforementioned Massive-training artificial neural network (MTANN) was used. The dataset consisted of liver CT images of 32 patients including 142 liver tumors, and liver tumors handwritten by a radiologist were used as correct labels. Further, for the simplicity, the number of intermediate layers of the neural network was one in this example.

Cases of seven patients were used for the training, and cases of 25 patients were used for the testing. An image patch consisting of 7x7x7 pixels was used as the input kernel of the MTANN model, and the number of intermediate layer units was set to 80. A model for dividing an image or the like into a tumor area and the other area on a pixel-by-pixel basis was trained by using a binary cross-entropy (BCE) loss function.

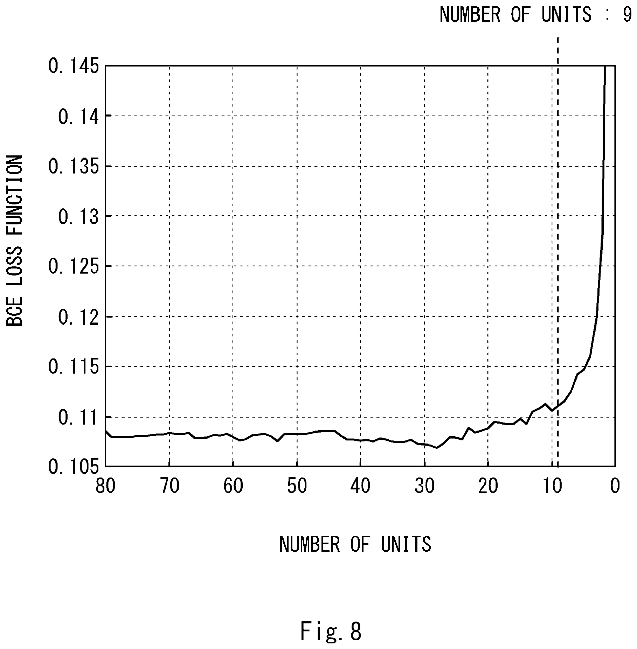

Fig. 8 shows a BCE loss function that changes as units are deleted. When units were deleted from a model including 80 units one after another, the BCE loss did not significantly change before the number of units reached 10, although it slightly fluctuated. However, the BCE loss sharply increased in the range in which the number of units was 9 or smaller,.

Therefore, by setting an reference error value $E_p$ used in the unit deleting process as appropriate, it is possible to reduce the number of units while keeping the error, i.e., the BCE loss function, within a desired range. For example, according to this configuration, when the reference value of the BCE loss function, which is the reference error value $E_p$, is set to 0.11, the number of units can be reduced to 14.

According to the above-described condensed neural network, it is possible to perform image processing equivalent to that performed by using the neural network from which no unit has been deleted. Further, by reducing the number of units, the functions required for the image processing can be put together in a smaller number of units than the number of units before the deletion. In this way, when the function of each unit is analyzed as described later, the number of units to be analyzed can be reduced, thus making it possible to carry out an efficient analysis.

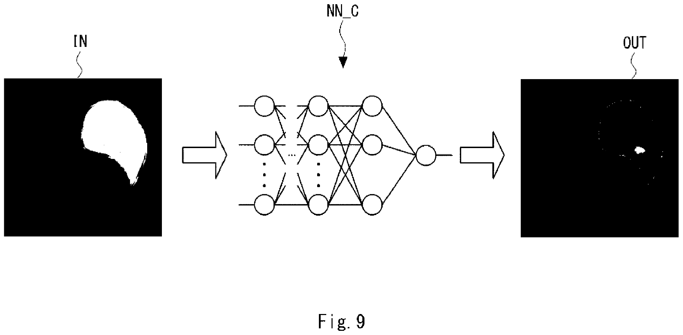

An image data to be analyzed is input to the condensed neural network, and image data composed of output values output from the output layer becomes one which has subjected to the enhancement/ suppression processing based on the training result. Fig. 9 shows an example of an output image when an input image to be analyzed is input to a condensed neural network. In this example, a CT image of a human liver is used as an input image, and an output image OUT in which a tumor part is emphasized is output by the condensed neural network NN_C.

However, even when the output image OUT is observed, it is understood only that the tumor part is emphasized, but it is not possible to understand how each unit in the neural network works. Therefore, a method for generating a function map used for understanding the working of each unit in the neural network will be described hereinafter.

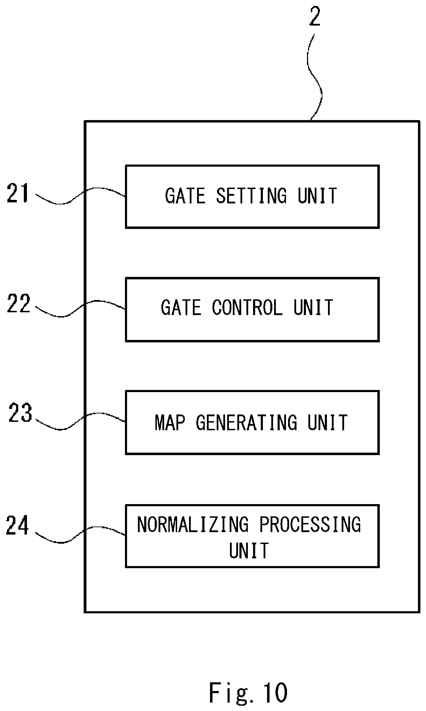

Fig. 10 schematically shows a configuration of a function map generating apparatus 2. The function map generating apparatus 2 includes a gate setting unit 21, a gate control unit 22, a map generating unit 23, and a normalizing processing unit 24.

The gate setting unit 21 sets gates behind (i.e., on the output side of) the layer to be analyzed of the neural network that has subjected to the condensing process, received from the condensing processing apparatus 1. The gate control unit 22 controls the gates so that only one unit to be analyzed in the layer to be analyzed is connected to the output layer. The map generating unit 23 performs processing for generating a map for the unit to be analyzed. The normalizing processing unit 24 performs normalizing process for the map generated by the map generating unit 23.

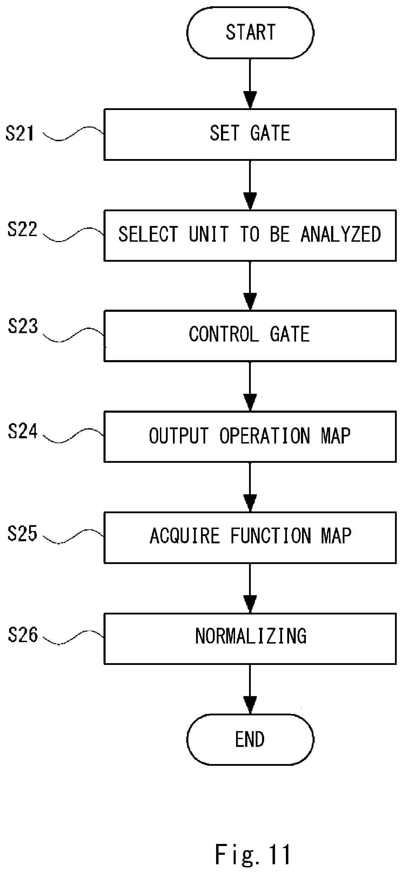

The map generating process will be described hereinafter. Fig. 11 shows a flowchart of the map generating process.

Step S21

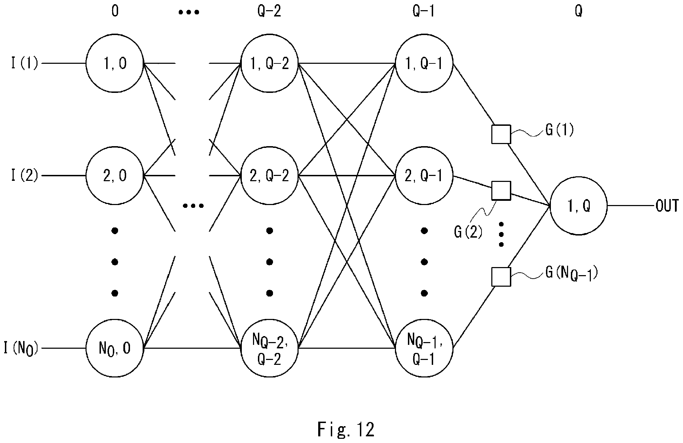

The gate setting unit 21 sets gates behind (i.e., on the output side of) the layer to be analyzed. Fig. 12 schematically shows a neural network in which gates have already been set. Note that for the simplicity of explanation, the description will be given on the assumption that the (Q-1)th layer, which is an intermediate layer at the last stage, is the layer to be analyzed. In this case, gates $G(1)$ to $G(Q-1)$ are set between the outputs of units $U(1, Q-1)$ to $U(N_{Q-1}, Q-1)$ included in the (Q-1)th layer, which is the layer to be analyzed, and the input of the unit $U(1, Q)$ of the Qth layer, which is the output layer.

Step S22

The gate control unit 22 selects, as the unit to be analyzed $U_{OBJ}$, one unit from units $U(1, Q-1)$ to $U(N_{Q-1}, Q-1)$ in the (Q-1)th layer, which is the layer to be analyzed.

Step S23

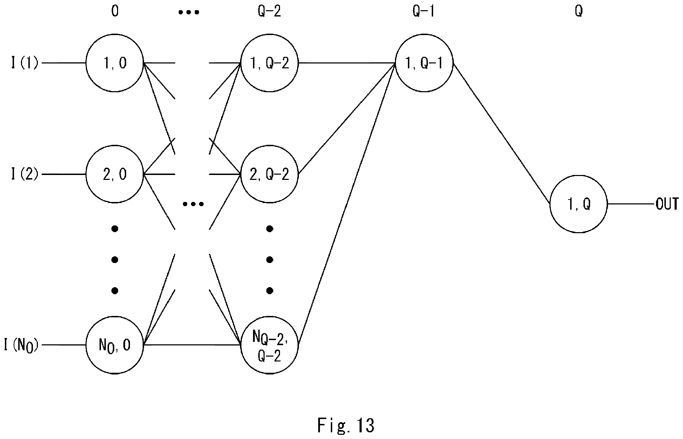

The gate control unit 22 turns on the gate located behind the unit to be analyzed $U_{OBJ}$ and turns off the other gates. Fig. 13 shows an example of a choice of the unit to be analyzed $U_{OBJ}$. Fig. 13 shows an example in which the 1st unit $U(1, Q-1)$ is selected as the unit to be analyzed $U_{OBJ}$. In this case, the gate $G(1)$ is turned on and the gates $G(2)$ to $G(N_{Q-1})$ are turned off. In this way, a value is output only from the unit $U(1, Q-1)$, which is the unit to be analyzed $U_{OBJ}$.

Step S24

The map generating unit 23 inputs an input image IN to the neural network and acquires an output value from the output layer. In this way, it is possible to acquire image data composed of the output value of the unit to be analyzed $U_{OBJ}$ when the unit to be analyzed $U_{OBJ}$ is set as the only active unit in the layer to be analyzed. This output value may be an output value from the output layer. The image data acquired in this process is referred to as an operation map of the unit to be analyzed $U_{OBJ}$.

Step S25

Since the operation map is image data having gradation levels corresponding to the output values, it is difficult to clearly determine for which part of the input image the unit to be analyzed has performed the enhancement processing or the suppression processing, and to what extent it has performed the processing just by looking at the operation map. Therefore, the map generating unit 23 reverses the darkness/lightness on the operation map depending on whether the unit to be analyzed has performed the enhancement processing or performed the suppression processing. Whether the enhancement processing has been performed or the suppression processing has been performed is determined by the sign of the weight which connects the unit to be analyzed $U_{OBJ}$ in the (Q-1)th layer and the unit U(1, Q) in the Qth layer. That is, when the weight is a positive value, it is the enhancement processing, and when the weight is a negative value, it is the suppression processing. Note that the operation map that has been subjected to the processing for reversing the darkness/lightness on the operation map is referred to as a function map. Note that when the operation map is composed of the output values from the output layer, whether the processing is the enhancement processing or the suppression processing is determined according to whether the signs of the pixels on the operation map are positive or negative. That is, when the signs of the pixels are positive, the processing is determined to be the enhancement processing, and when the signs of the pixels are negative, the processing is determined to be the suppression processing. For example, the image or the like may be displayed in neutral colors (intermediate gradation level) when neither the enhancement processing nor the suppression processing is performed, displayed in bright gradations when the enhancement processing has been performed, and displayed in dark gradations when the suppression processing has been performed. Note that the image may be displayed in dark gradations when the enhancement processing has been performed, and displayed in bright gradations when the suppression processing has been performed.

Specifically, the signs of the values of the operation map are reversed depending on whether the processing is the enhancement processing or the suppression processing. That is, in the case of the enhancement processing, the values of the operation map are used as they are, i.e., are maintained as positive values, and in the case of the suppression processing, the signs of the values of the operation map are reversed, i.e., converted into negative values. In this way, it is possible to obtain a function map in which whether the enhancement processing has been performed or the suppression processing has been performed is clearly shown.

Step S26

The object to be enhanced or suppressed by the unit to be analyzed and the degree of the enhancement or suppression are shown in the function map. However, when the degree of the enhancement or suppression is small, the contrast difference in the function map becomes small. In this case, it is conceivable that it is difficult to determine for which part of the input image the unit to be analyzed has performed the enhancement or suppression. Therefore, in this example, the pixel values in the function map are normalized.

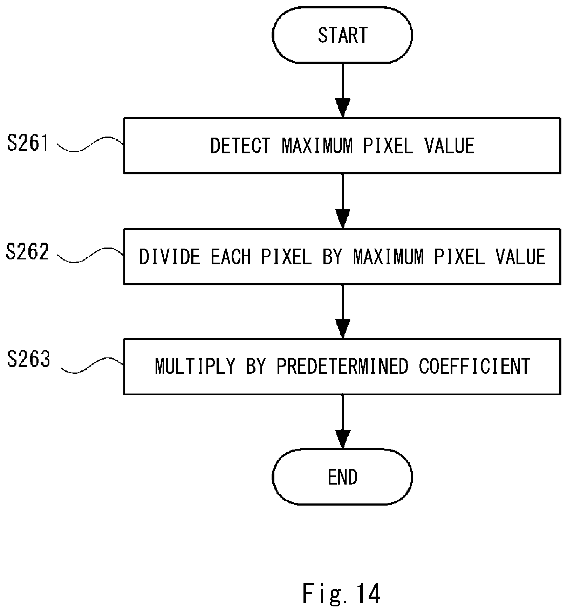

An example of the normalizing process will be described hereinafter. Fig. 14 shows a flowchart of the normalizing process.

Step S261

The absolute value of each pixel in the function map is obtained, and the maximum pixel value $P_{MAX}$ in the absolute value function map is detected.

Step S262

Each pixel value is divided by the maximum pixel value $P_{MAX}$. In this way, each pixel value in the function map is converted into a value from 0 to 1 when the processing is the enhancement processing, and is converted into a value from -1 to 0 when the processing is the suppression processing. A value 0 indicates processing in which the pixel value is neither enhanced nor suppressed.

Step S263

In order to impart a sufficient contrast to the function map, each pixel value after the division is multiplied by a predetermined coefficient. The coefficient to be multiplied may be an arbitrary coefficient such as 100 or 1,000.

For example, when the pixel values are distributed between 0 to 150 in a given function map, the maximum pixel value $P_{MAX}$ is 150. Then, by multiplying each pixel value by 1,000 as a coefficient, the distribution of pixel values in the function map can be converted into 0 to 1,000. As a result, the contrast of the function map can be clarified.

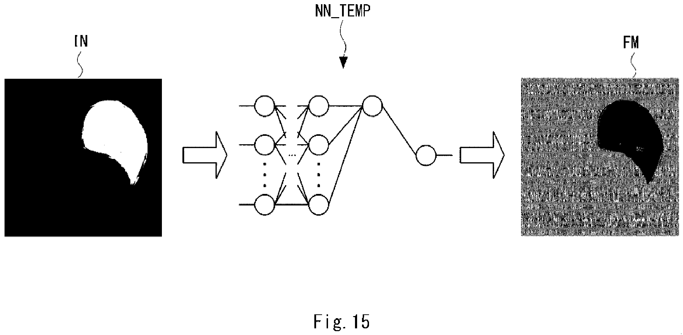

Fig. 15 shows an example of the function map. In Fig. 15, the neural network in which the number of units to be analyzed is limited to one in the layer to be analyzed is indicated by a symbol NN_TEMP. In this function map, a value 0 is represented by gray; a negative value is represented by a color darker than the gray; and a positive value is represented by a color lighter than the gray. In this example, as shown in the function map FM, the part of the liver other than the tumor is darker than the gray, thus indicating that the unit to be analyzed has performed processing for suppressing the part of the liver other than the tumor. As described above, by limiting the number of units to be analyzed to one, it is possible to clearly show what kind of process the unit to be analyzed has performed for the input image.

Next, grouping of function maps will be described. Hierarchical clustering is applied by using a plurality of function maps acquired for a plurality of units as inputs. In this way, function maps between which the distance is short can be grouped together. A group average method, a Ward method, a shortest distance method, or the like can be used for the calculation of hierarchical clustering. Note that the clustering used here is not limited to hierarchical clustering. That is, any of various clustering methods can be used. Non-hierarchical clustering such as a k-means method can also be used. Hard clustering in which each unit is assigned to one group may be used, or soft clustering in which a probability that each unit belongs to a plurality of groups is calculated may be used.

The distance used in the hierarchical clustering is not limited any particular distances, and various distance functions, error functions, loss functions, similarity functions, or combinations thereof may be used. For example, an Euclidean distance, an SSIM (Structural Similarity Index Measure) distance, a normalized root mean square error, a Mahalanobis distance, or combinations thereof may be used. Note that when the similarity, the distance, and the error are combined with one another, an evaluation function is determined while taking these directions into consideration. For example, it is determined such that the higher the similarity, the shorter the distance, and the smaller the error, the better.

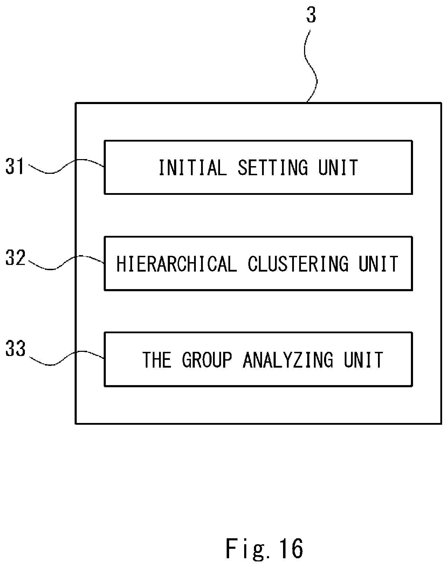

Fig. 16 schematically shows a configuration of a clustering apparatus 3. The clustering apparatus 3 includes an initialization unit 31, a hierarchical clustering unit 32, and a group analyzing unit 33.

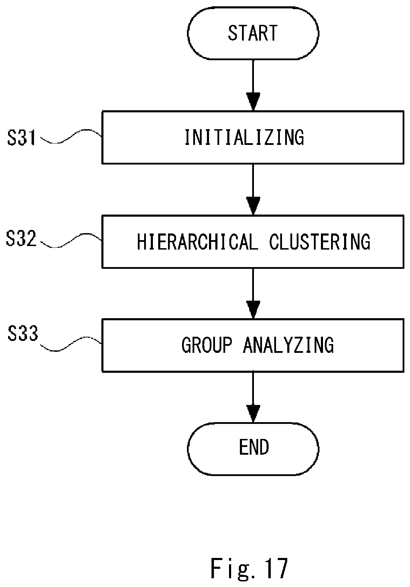

A hierarchical clustering process will be described hereinafter,. Fig. 17 is a flowchart of the clustering process.

Step S31

The initialization unit 31 initializes each of function maps as belonging to an individual cluster.

Step S32

The hierarchical clustering unit 32 fuses clusters one after another in order of the distance between function maps, i.e., in ascending order of the distance between clusters. Note that the fusion of clusters is repeated until a plurality of clusters in the initial state are fused into one cluster. Regarding the distance between clusters, for example, when function maps are expressed by multidimensional vectors, a distance between two multidimensional vectors may be used. Further, the distance between the centers of gravity of clusters may also be used.

Step S33

When all the clusters are fused into one cluster, the group analyzing unit 33 performs grouping of units based on the result of the hierarchical clustering.

In this way, for a plurality of function maps, it is possible to hierarchically recognize function maps whose functions are similar to each other.

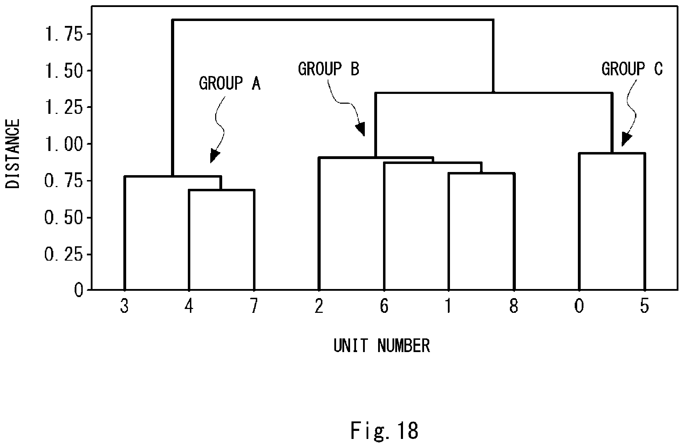

An example of the clustering process is shown hereinafter. In this example, function maps for nine units 0 to 8 were hierarchically clustered by using an MRI image of a liver in which a tumor is found as an input image. Fig. 18 shows an example of grouping of units. In this example, it can be seen that the nine units are roughly divided into three groups A to C.

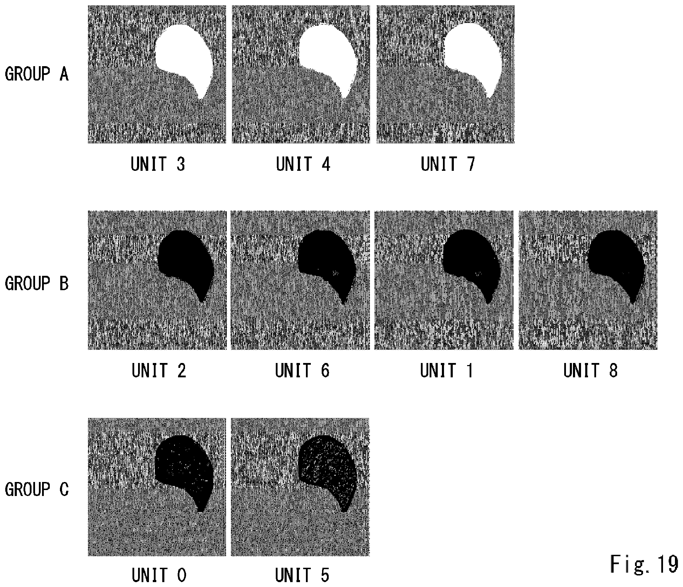

Fig. 19 shows a relationship between function maps and groups. The group A includes units corresponding to units that emphasize the area of the liver. The group B includes units that suppress parts other than the tumor in the area of the liver. The group C includes units that suppress the tumor part in the area of the liver.

As described above, units having similar functions can be grouped by performing hierarchical clustering for function maps.

Other Embodiments

Note that the present invention is not limited to the above-described embodiments, and they may be modified as appropriate without departing from the spirit thereof. For example, although examples in which image data, which is a diagnostic image obtained by imaging by an image diagnostic apparatus, is trained have been described in the above-described embodiments, they are merely examples. For example, data to be trained is not limited to any particular data, and needless to say, the above-described information processing system can be applied to associative learning of models in various fields such as social networks in which personal/confidential information is handled, securities, financial insurances, medical cares, health, smartphones, e-commerce, online sales, and autonomous driving.

In the above-described embodiments, the present invention has been mainly described as a hardware configuration, and however, it is not limited to this. Any processing can be achieved by causing a CPU(central processing unit) to execute a computer program. In this case, a computer program can be stored and provided to a computer by use of various types of non-transitory computer-readable media. Such non-transitory computer-readable media include various types of tangible storage media. Examples of such non-transitory computer-readable media include a magnetic storage medium (e.g., a flexible disk, a magnetic tape, a hard-disk drive), a magneto-optical recording medium (e.g., a magneto-optical disk), a CD-ROM (read-only memory), a CD-R, a CD-R/W, and a semiconductor memory (e.g., e a mask ROM, a programmable ROM (PROM), an erasable PROM (EPROM), a flash ROM, or a random-access memory (RAM)). Furthermore, a program may also be provided to a computer by use of various types of transitory computer-readable media. Examples of such transitory computer-readable media include an electric signal, an optical signal, and an electromagnetic wave. A transitory computer-readable medium can provide a program to a computer via a wired communication line, such as an electric wire or an optical fiber, or via a wireless communication line.

This application is based upon and claims the benefit of priority from Japanese patent application No. 2023-119202, filed on July 21, 2023, the disclosure of which is incorporated herein in its entirety by reference.

**Reference Signs List**

| | |
|---|---|
| 1 | CONDENSING PROCESSING APPARATUS |
| 2 | FUNCTION MAP GENERATING APPARATUS |
| 3 | CLUSTERING APPARATUS |
| 4 | STORAGE DEVICE |
| 11 | PROCESSING CONTROL UNIT |
| 12 | ERROR CALCULATING UNIT |
| 13 | UNIT DELETING UNIT |
| 14 | TRAINING PROCESSING UNIT |
| 21 | GATE SETTING UNIT |
| 22 | GATE CONTROL UNIT |
| 23 | MAP GENERATING UNIT |
| 24 | NORMALIZING PROCESSING UNIT |
| 31 | INITIAL SETTING UNIT |
| 32 | HIERARCHICAL CLUSTERING UNIT |
| 33 | THE GROUP ANALYZING UNIT |
| 100 | NETWORK ANALYZING SYSTEM |
| 201 | MTANN |
| 202 | INPUT LAYER |
| 203 | HIDDEN LAYER |
| 204 | OUTPUT LAYER |
| 1000 | COMPUTER |
| 1001 | CPU |
| 1002 | ROM |
| 1003 | RAM |
| 1004 | BUS |
| 1005 | INPUT/OUTPUT INTERFACE |
| 1006 | INPUT UNIT |
| 1007 | OUTPUT UNIT |
| 1008 | STORAGE UNIT |
| 1009 | COMMUNICATION UNIT |
| 1010 | DRIVE |
| 1011 | MAGNETIC DISK |
| 1012 | OPTICAL DISK |
| 1013 | FLEXIBLE DISK |
| 1014 | SEMICONDUCTOR MEMORY |

**Claims**

**1.** A network analyzing system comprising:

a condensing processing apparatus configured to condense a neural network by excluding one or more units from a plurality of units included in the neural network so that an error of an output of the neural network falls within a predetermined range; and
a function map generating apparatus configured to generate, in a state where a value is output from only one unit to be analyzed among a plurality of units included in a layer to be analyzed, a function map reflecting processing of the unit to be analyzed by inputting an input image to the condensed neural network, the layer to be analyzed being one of one or more intermediate layers of the condensed neural network.

2. The network analyzing system according to claim 1, further comprising a clustering apparatus configured to perform clustering for the plurality of function maps generated for the plurality of input images, and thereby grouping units corresponding to the plurality of function maps.

3. The network analyzing system according to claim 1 or 2, wherein in the function map, degrees of enhancement processing or suppression processing performed for pixels or patterns of the input image are displayed in gradation.

4. The network analyzing system according to claim 3, wherein in the function map,

pixels or patterns for which neither the enhancement processing nor the suppression processing is performed are displayed at an intermediate gradation level,
pixels or patterns for which the enhancement processing is performed are displayed at one of gradation levels of two areas located on both sides of the intermediate gradation level in a range of gradation display, and
pixels or patterns for which the suppression processing is performed are displayed at the other gradation level of the two areas located on both sides of the intermediate gradation level.

5. The network analyzing system according to claim 1 or 2, wherein the function map generating apparatus comprises:

a gate operation unit configured to operate the neural network so that a value is output from only the unit to be analyzed of the layer to be analyzed in the neural network; and
a map generating unit configured to generate a function map reflecting processing of the unit to be analyzed by inputting the input image to the neural network.

6. A network analyzing method comprising:

condensing a neural network by excluding one or more units from a plurality of units included in the neural network so that an error of an output of the neural network falls within a predetermined range; and
generating, in a state where a value is output from only one unit to be analyzed among a plurality of units included in a layer to be analyzed, a function map reflecting processing of the unit to be analyzed by inputting an input image to the condensed neural network, the layer to be analyzed being one of one or more intermediate layers of the condensed neural network.

7. A program for causing a computer to execute:

processing for condensing a neural network by excluding one or more units from a plurality of units included in the neural network so that an error of an output of the neural network falls within a predetermined range; and
processing for generating, in a state where a value is output from only one unit to be analyzed among a plurality of units included in a layer to be analyzed, a function map reflecting processing of the unit to be analyzed by inputting an input image to the condensed neural network, the layer to be analyzed being one of one or more intermediate layers of the condensed neural network.

1001　　　　　1002　　　　　1003　　　　　　　　　　　1000

| CPU | | ROM | | RAM |

1004

INPUT/OUTPUT INTERFACE　　　　1005

| INPUT UNIT | OUTPUT UNIT | STORAGE UNIT | COMMUNICA-TION UNIT | DRIVE |　　1010

1006　　　　1007　　　　1008　　　　1009

1011　1012　1013　1014

Fig. 1

ORIGINAL INPUT IMAGE

Fig. 2

100

TC ⟶

... ⟶

IN ⟶

... ⟶

NN ⟶

... ⟶

CONDENSING
PROCESSING
APPARATUS ~1

↓ NN_C

IN ⟶

... ⟶

FUNCTION MAP
GENERATING APPARATUS ~2

↓ FM

CLUSTERING APPARATUS ~3

Fig. 3

100

TC    IN    NN

TC

IN

NN

4 ⟋ STORAGE
DEVICE

TC →

IN →

NN →

CONDENSING
PROCESSING
APPARATUS  ⟍ 1

NN_C ↓

IN →

FUNCTION MAP
GENERATING APPARATUS  ⟍ 2

FM ↓

CLUSTERING APPARATUS  ⟍ 3

Fig. 4

1

PROCESSING CONTROL
UNIT

11

ERROR CALCULATING
UNIT

12

UNIT DELETING
UNIT

13

TRAINING PROCESSING
UNIT

14

Fig. 5

Fig. 6

START

S1 — READ NN

S2 — $\forall q \ F(q) = 1$

S3 — $q = 0$

S4 — $q = q + 1$

S5 — $F(q) = 1$?  —NO→

YES

S61 — $n = 1$

S62 — CALCULATE $E(n, q)$

S63 — $n = N_q$?  —YES→

NO

S64 — $n = n + 1$

S6

S7 — $q = Q - 1$?  —NO→

YES

S8 — DELETE $U(a, b)$ CORRESPONDING TO MINIMUM ERROR

S9 — RE-TRAIN NN

S10 — CALCULATE ERROR E

S11 — $E > E_p$?  —NO→

YES

S12 — $NN_t = NN_{t-1}$

S13 — $F(b) = 1$

S14 — $\forall q \ F(q) = 0$?  —NO→

YES

END

Fig. 7

21

Fig. 8

Fig. 9

2

| GATE SETTING UNIT | 21 |

| GATE CONTROL UNIT | 22 |

| MAP GENERATING UNIT | 23 |

| NORMALIZING PROCESSING UNIT | 24 |

Fig. 10

START

S21 — SET GATE

S22 — SELECT UNIT TO BE ANALYZED

S23 — CONTROL GATE

S24 — OUTPUT OPERATION MAP

S25 — ACQUIRE FUNCTION MAP

S26 — NORMALIZING

END

Fig. 11

Fig. 12

Fig. 13

START

S261 — DETECT MAXIMUM PIXEL VALUE

S262 — DIVIDE EACH PIXEL BY MAXIMUM PIXEL VALUE

S263 — MULTIPLY BY PREDETERMINED COEFFICIENT

END

Fig. 14

IN

NN_TEMP

FM

Fig. 15

3

| 31 | INITIAL SETTING UNIT |
| 32 | HIERARCHICAL CLUSTERING UNIT |
| 33 | THE GROUP ANALYZING UNIT |

Fig. 16

```
              ┌─────────────┐
              │    START    │
              └──────┬──────┘
                     │
                     ▼
        ┌──────────────────────────┐
  S31 ~─┤       INITIALIZING        │
        └─────────────┬────────────┘
                      │
                      ▼
        ┌──────────────────────────┐
  S32 ~─┤   HIERARCHICAL CLUSTERING │
        └─────────────┬────────────┘
                      │
                      ▼
        ┌──────────────────────────┐
  S33 ~─┤      GROUP ANALYZING      │
        └─────────────┬────────────┘
                      │
                      ▼
              ┌─────────────┐
              │     END     │
              └─────────────┘
```

Fig. 17

Fig. 18

GROUP A

UNIT 3　　　　UNIT 4　　　　UNIT 7

GROUP B

UNIT 2　　　　UNIT 6　　　　UNIT 1　　　　UNIT 8

GROUP C

UNIT 0　　　　UNIT 5

Fig. 19

## INTERNATIONAL SEARCH REPORT

| International application No. |
|---|
| **PCT/JP2024/009074** |

| A. | CLASSIFICATION OF SUBJECT MATTER |
|---|---|

*G06F 18/213*(2023.01)i; *G06N 3/082*(2023.01)i
FI:   G06F18/213; G06N3/082

According to International Patent Classification (IPC) or to both national classification and IPC

| B. | FIELDS SEARCHED |
|---|---|

Minimum documentation searched (classification system followed by classification symbols)

G06F18/213; G06N3/082

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-8896 A (CASIO COMPUTER CO., LTD.) 16 January 2020 (2020-01-16) claim 1 | 1-7 |
| A | 渡邊千紘、深層学習の学習経過におけるクラスタ構造の推移の可視化, 2019年度人工知能学会全国大会（第３３回）講演論文集 [online], 01 June 2019 [retrieved on 09 May 2024], Internet:<URL:https://www.jstage.jst.go.jp/article/pjsai/JSAI2019/0/JSAI2019_2Q3J202/_pdf/-char/ja><DOI: 10.11517/pjsai.JSAI2019.0_2Q3J202>, vol. JSAI2019, 2Q3-J-2-02, pp. 1-4, (WATANABE, Chihiro. Visualization of cluster structure transition in deep learning.), non-official translation (Lecture Proceedings of the 33rd Annual Conference of the Japanese Society for Artificial Intelligence, 2019) entire text, all drawings | 1-7 |
| A | JP 9-91264 A (HITACHI MEDICAL CORP.) 04 April 1997 (1997-04-04) paragraphs [0036]-[0050] | 1-7 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

### INTERNATIONAL SEARCH REPORT
Information on patent family members

| International application No. |
| --- |
| **PCT/JP2024/009074** |

| Patent document<br>cited in search report | | | Publication date<br>(day/month/year) | Patent family member(s) | Publication date<br>(day/month/year) |
| --- | --- | --- | --- | --- | --- |
| JP | 2020-8896 | A | 16 January 2020 | (Family: none) | |
| JP | 9-91264 | A | 04 April 1997 | (Family: none) | |

Form PCT/ISA/210 (patent family annex) (July 2022)

**REFERENCES CITED IN THE DESCRIPTION**

**Patent documents cited in the description**

- US 7545965 B
- US 6819790 B

- JP 2023119202 A

**Non-patent literature cited in the description**

- **R. R. SELVARAJU** ; **M. COGSWELL** ; **A. DAS** ; **R. VEDANTAM** ; **D. PARIKH** ; **D. BATRA**. Grad-CAM: Visual Explanations from Deep Networks via Gradient-Based Localization. *2017 IEEE International Conference on Computer Vision (ICCV), Venice, Italy*, 2017, 618-626
- **MATTHEW D. ZEILER et al.** Visualizing and Understanding Convolutional Networks. *ECCV 2014, Part I, LNCS*, vol. 8689, 818-833

- **SUZUKI K et al.** A Simple Neural Network Pruning Algorithm with Application to Filter Synthesis. *Neural Proc Lett*, 2001
- **ZIV JOSEPH et al.** Fast optimal leaf ordering for hierarchical clustering. *Bioinformatics*, 2001, vol. 17 (1), S22-S29